# EUROPÄISCHE PATENTSCHRIFT

(11) **EP 1 881 290 B1**
(45) Veröffentlichungstag und Bekanntmachung des Hinweises auf die Patenterteilung: **31.12.2008**
(21) Anmeldenummer: 07033508.8
(22) Anmeldetag: 11.07.2007
(51) Int. Cl.: F28D 20/00

(54) **Schichtenspeicher**
Multi-layered storage tank
Accumulateur stratifié

(30) Priorität: 17.07.2006 AT 12102006
(43) Veröffentlichungstag der Anmeldung: 23.01.2008
(73) Patentinhaber: Vaillant GmbH, 42859 Remscheid (DE)
(72) Erfinder: Morilleau, Nicolas, 44300 Nantes (FR); Pelloquin, Emmanuel, 44100 Nantes (FR)
(74) Vertreter: Hocker, Thomas

(56) Entgegenhaltungen:
- EP-A- 1 273 466
- DE-A1- 19 704 986
- DE-U1- 29 920 954
- US-A- 4 522 254

## Beschreibung

Die Erfindung bezieht sich auf einen Schichtenspeicher, vorzugsweise für Heizungsgeräte.

Schichtenspeicher zeichnen sich dadurch aus, dass stets zur Speicherladung kaltes Wasser dem unteren Teil entnommen und nach der Erwärmung als heißes Wasser oben eingeführt wird. Es stellt sich dabei eine Schichtung ein. Jedoch ist bei der Speicherladung darauf zu achten, dass es durch die Zuführung von Wasserströmen nicht zu einer ungewollten Verwirbelung kalter mit warmer Schichten kommt. Ein Schichtenspeicher gemäß dem Oberbegriff von Anspruch 1 ist aus dem Dokument US 4 522 254 bekannt.

Aus dem EP 0 557 994 B1 ist ein Warmwasserspeicher 1 bekannt, der über eine Leitung mit Kaltwasser versorgt wird und eine Ausgangsleitung 4 aufweist. Sowohl das Ausgangsrohr oder Warmwasserzapfrohr 4 als auch ein Rücklaufrohr 6 sind im oberen Bereich des Warmwasserspeichers 1 angeordnet, so dass ein Wasserkreislauf über ein Vorlaufrohr 7, ein Ventil 12 die Ausgangsleitung 4 und das Rücklaufrohr 6 zurück in einen Zusatzspeicher 2 geführt werden kann.

Die europäische Patentanmeldung 0 561 032 A1 zeigt einen Pufferspeicherbehälter 2, bei dem ein Vorlaufrohr 23 und ein Rücklaufrohr 26 im oberen Bereich 7 des Speichers angeordnet sind.

Aus US 4 522 254 ist ein Speicherbehälter bekannt, bei dem gleichzeitig warmes Wasser aus dem oberen Bereich durch eine Leitung und kälteres Wasser aus dem unteren Bereich durch eine andere Leitung entnommen werden kann. Dieses Wasser wird dann in einem 3-Wege-Ventil gemischt und anschließend in entsprechenden Wärmetauschern entweder erwärmt oder gekühlt. Anschließend wird das Wasser dem Speicher im oberen oder unteren Bereich wieder zugeführt. Zwei Trennplatten mit einer Vielzahl von Löchern in der Nähe des Bodens und des oberen Randes verhindern massive Verwirbelungen im mittleren Bereich des Speichers.

Der Erfindung liegt die Aufgabe zugrunde, einen Schichtenspeicher zu schaffen, welcher eine exakte Schichtung ohne starke Durchmischung bei der Speicherladung ermöglicht.

Die Aufgabe wird durch einen Schichtenspeicher gemäß Anspruch 1 dadurch gelöst, dass der Schichtenspeicher durch eine Trennplatte mit Speicherwasserdurchführung in zwei Teilvolumina getrennt ist und eine turbulente Strömung heißen Wassers in den kalten Bereich vermieden wird. Befinden sich die Anschlüsse des Speichers an der Unterseite, so müssen die Heißwassereintrittsleitung und Heißwasseraustrittsleitung durch die Trennplatte geführt werden. Die Heißwassereintrittsleitung und / oder Heißwasseraustrittsleitung werden durch die Speicherwasserdurchführung geführt. Dies reduziert die Stellen, welche Turbulenzen verursachen. Durch genau eine Speicherwasserdurchführung in der Trennplatte ergibt sich der Vorteil, dass bei der Speicherladung genau ein Volumenstrom von oben nach unten läuft und somit ein Rückstrom durch eine zweite Durchführung nicht möglich ist.

Besonders vorteilhaft ist es, wenn das obere Teilvolumen etwa 10 % des Gesamtvolumens ausmacht. In diesem Fall bauen sich die Turbulenzen im oberen Bereich ab, so dass beruhigtes Wasser nach unten strömt.

Gemäß den Merkmalen des abhängigen Anspruchs 5 können mehrere Schichtenspeicher in Reihe geschaltet und somit der Effekt verstärkt werden.

Ein Ausführungsbeispiel der Erfindung wird nun anhand der Figuren näher erläutert. Hierbei zeigen
Figur 1 einen Schichtenspeicher gemäß einem Ausführungsbeispiel der Erfindung,
Figur 2 die Trennplatte hierzu,
Figur 3 den oberen Teil des Warmwasserspeichers,
Figur 4 die Strömung im Speicher und
Figur 5 eine Reihenschaltung von Schichtenspeichern gemäß einem Ausführungsbeispiel der Erfindung.

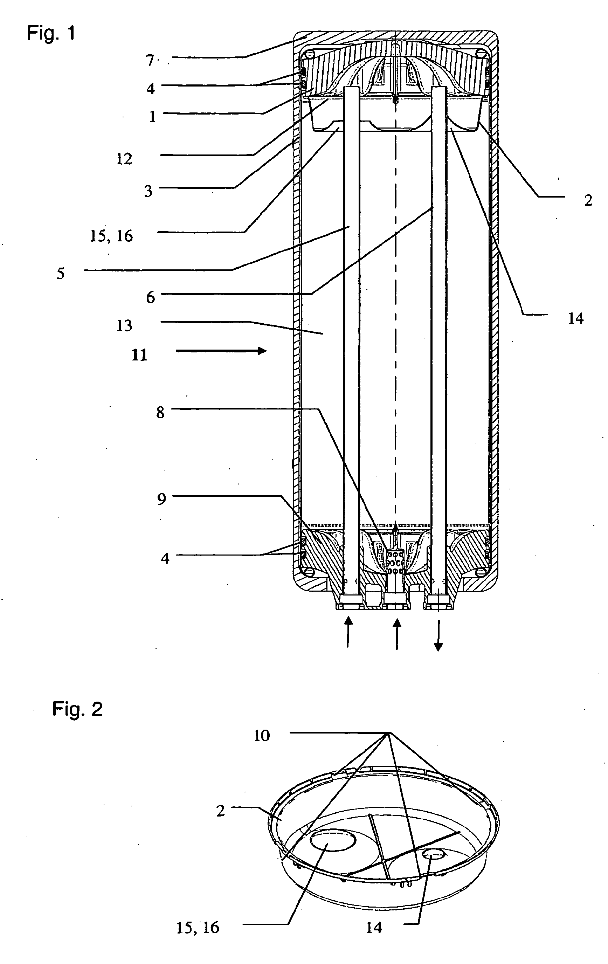

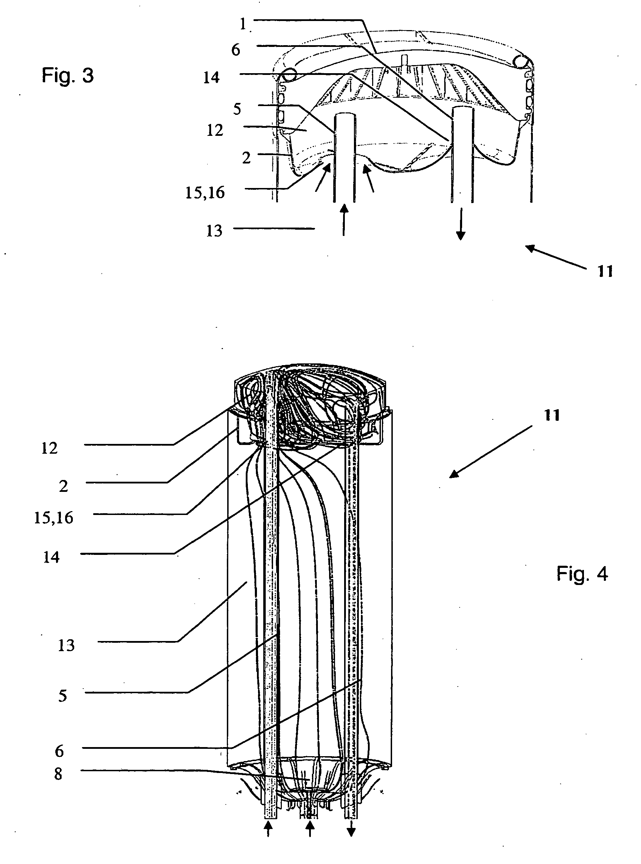

Figur 1 zeigt einen Schichtenspeicher 11, der aus einem Edelstahlzylinder 3 sowie einem Kunststoffboden 9 und einem Kunststoffdeckel 1 gebildet wird. Ein derartige zusammengesetzter Speicher ist aus AT 413 441 / EP 1 630 487 bekannt. Der Boden 9 und der Deckel 1 sind mittels Dichtungen 4 gegenüber dem Zylinder 3 abgedichtet. Um den Zylinder 3 sowie Teile des Bodens 9 und des Deckels 1 befindet sich eine Wärmedämmung 7. Innerhalb des Warmwasserspeichers 11 befinden sich eine Heißwassereintrittsleitung 5, eine Heißwasseraustrittsleitung 6 sowie eine kombinierte Kaltwasserzulauf-Kaltwasserabzugleitung 8, die allesamt durch den Boden 9 angeschlossen werden. Eine Trennplatte 2, welche mittels Rastclips 10 mit dem Deckel 1 verbunden ist, trennt den Schichtenspeicher 11 in zwei Teilvolumina 12, 13. Die Trennplatte 2 ist in Figur 2 mit ihren Rastclips 10 detailliert als Einzelposition dargestellt. In der Trennplatte 2 befinden sich Durchführungen 14, 15 für die Heißwassereintrittsleitung 5 und die Heißwasseraustrittsleitung 6 sowie eine Speicherwasserdurchführung 16, wobei die Speicherwasserdurchführung 16 und die Durchführung 15 für die Heißwassereintrittsleitung 5 in diesem Fall identisch sind. Figur 3 zeigt den oberen Teil des Warmwasserspeichers 11 im Detail.

Im Betrieb wird bei Brauchwasserzapfung durch die Heißwasseraustrittsleitung 6 warmes Wasser entnommen; kaltes Wasser strömt durch die Kaltwasserzulaufleitung 8 nach. Bei der Speicherladung wird durch die Kaltwasserabzugleitung 8 kühles Wasser entnommen, in einem nicht dargestellten Wärmeaustauscher erhitzt und über die Heißwassereintrittsleitung 5 zugeführt. Hierbei kommt es zu starken Verwirbelungen im oberen Teilvolumen 12; die Trennwand 2 verhindert, dass es zu ausgeprägten Vermischungen des Wassers im oberen Teilvolumen 12 mit Wasser aus dem unteren Teilvolumen 13 kommt. Stattdessen erfolgt ein laminarer Wasserstrom durch die Speicherwasserdurchführung 16 vom oberen Teilvolumen 12 zum unteren Teilvolumen 13. Dies verdeutlicht Figur 4.

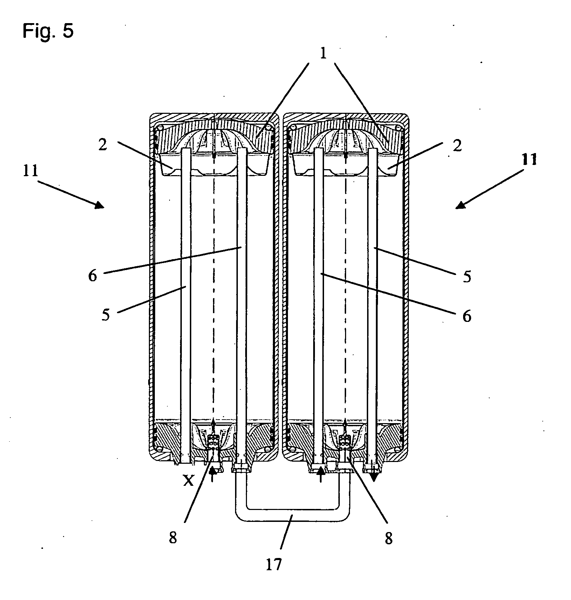

In einer vorteilhaften Ausgestaltung der Erfindung gemäß Figur 5 werden mehrere erfindungsgemäße Schichtenspeicher 11 in Reihe geschaltet, so dass die Heißwasseraustrittsleitung 6 des ersten, linken Schichtenspeichers 11 über eine Verbindungsleitung 17 mit der Kaltwasserzulaufleitung 8 des zweiten, rechten Schichtenspeichers 11 verbunden ist. Sind mehr als zwei Schichtenspeicher 11 in Reihe geschaltet, so wird die Heißwasseraustrittsleitung 6 des zweiten Schichtenspeichers 11 mit der Kaltwasserzulaufleitung 8 des dritten Schichtenspeichers 11 verbunden; dies setzt sich bis zum letzten Schichtenspeicher 11 gegebenenfalls in gleicher Weise fort. Hierdurch lässt sich eine besonders gute Temperaturschichtung erzielen. Gleichzeitig wird durch eine derartige Anordnung - bei stets zylindrischen Speicherbehältern - erreicht, dass die Bautiefe reduziert werden kann.

## Patentansprüche

1. Schichtenspeicher (11), vorzugsweise für Heizungsanlagen, mit einer Heißwassereintrittsleitung (5), einer Heißwasseraustrittsleitung (6), einer Kaltwasserzulaufleitung (8) und einer Kaltwasserabzugleitung (8), wobei im Schichtenspeicher (11) eine Trennplatte (2) über den gesamten Querschnitt des Schichtenspeichers (11) diesen in zwei Teilvolumina (12, 13) teilt, **dadurch gekennzeichnet, dass** die Trennplatte (2) über genau eine Speicherwasserdurchführung (16) verfügt und die Trennplatte über Durchführungen (14, 15) für die Heißwassereintrittsleitung (5) und die Heißwasseraustrittsleitung (6) verfügt und die Heißwassereintrittsleitung (5) und /oder Heißwasseraustrittsleitung (6) durch die Speicherwasserdurchführung (16) führt.

2. Schichtenspeicher (11) nach Anspruch 1, **dadurch gekennzeichnet, dass** die Kaltwasserzulaufleitung (8) und die Kaltwasserabzugsleitung (8) eine Einheit bilden.

3. Schichtenspeicher (11) nach einem der Ansprüche 1 oder 2, **dadurch gekennzeichnet, dass** sich im Teilvolumen (12) oberhalb der Trennplatte (2) etwa 10 % des Volumens des Schichtenspeichers (11) befinden.

4. Schichtenspeicher (11) nach einem der Ansprüche 1 bis 3, **dadurch gekennzeichnet, dass** der Schichtenspeicher (11) im wesentlichen aus einen Zylinder (3) sowie einem damit verbundenen Deckel (1) und Boden (9) verfügt und die Trennplatte (2) mit dem Deckel (1) verbunden ist, wobei als Verbindungselemente vorzugsweise Rastclips (10) verwendet werden.

5. Anordnung von mehreren Schichtenspeichern (11) nach einem der Ansprüche 1 bis 4, **dadurch gekennzeichnet, dass** die Schichtenspeicher (11) in Reihe geschaltet werden, so dass die Heißwasseraustrittsleitung (6) des ersten Schichtenspeichers (11) mit der Kaltwasserzulaufleitung (8) des nächsten Schichtenspeichers (11) verbunden ist.

## Claims

1. A stratified storage (11), preferably for use in heating systems, comprising a hot water inlet line (5), a hot water outlet line (6), a cold water feed line (8) and a cold water discharge line (8), with provision being made in the said stratified storage (11) for a separating plate (2) extending over the entire cross-section of the stratified storage (11) and dividing the latter into two partial volumes (12, 13), **characterised in that** the separating plate (2) is provided with exactly one storage water lead-through opening (16) and that the separating plate (2) is provided with lead-through openings (14, 15) for the hot water inlet line (5) and the hot water outlet line (6) and that the hot water inlet line (5) and/or the hot water outlet line (6) leads through the storage water lead-through opening (16).

2. A stratified storage (11) as claimed in Claim 1, **characterised in that** the cold water feed line (8) and the cold water discharge line (8) form a single unit.

3. A stratified storage (11) as claimed in Claim 1 or 2, **characterised in that** the partial volume (12) above the separating plate (2) comprises approx. 10 % of the total volume of the stratified storage (11).

4. A stratified storage (11) as claimed in any of the Claims 1 to 3, **characterised in that** the stratified storage (11) is essentially composed of a cylinder (3) and, connected therewith, a cover plate (1) and a bottom plate (9) and that the separating plate (2) is connected with the cover plate (1), preferably by using snap-on clips (10) as connecting elements.

5. An arrangement of several stratified storage tanks (11) in accordance with any of the Claims 1 to 4, **characterised in that** the stratified storage tanks (11) are connected in series, so that the hot water outlet line (6) of the first stratified storage (11) is connected with the cold water feed line (8) of the next stratified storage (11).

## Revendications

1. Ballon de stockage à stratification (11), destiné de préférence à une installation de chauffage, doté d'une conduite d'entrée d'eau chaude (5), d'une conduite de sortie d'eau chaude (6), d'une conduite d'arrivée d'eau froide (8) et d'une conduite d'évacuation d'eau froide (8), le ballon à stratification (11) présentant une plaque de séparation (2) au-dessus de l'ensemble de la coupe transversale dudit ballon (11) et séparant celui-ci en deux volumes partiels (12, 13), **caractérisé en ce que** la plaque de séparation (2) est pourvue précisément d'un passe-tuyau pour l'eau stockée (16) ainsi que de passes-tuyaux (14, 15) pour la conduite d'entrée d'eau chaude (5) et la conduite de sortie d'eau chaude (6) et introduit la conduite d'entrée d'eau chaude (5) et / ou la conduite de sortie d'eau chaude (6) au travers du passe-tuyau pour l'eau stockée (16).

2. Ballon de stockage à stratification (11) selon la revendication 1, **caractérisé en ce que** la conduite d'arrivée d'eau froide (8) et la conduite d'évacuation d'eau froide (8) forment une unité.

3. Ballon de stockage à stratification (11) selon l'une des revendications 1 ou 2, **caractérisé en ce que** le volume partiel (12) au-dessus de la plaque de séparation (2) représente 10 % environ du volume du ballon (11).

4. Ballon de stockage à stratification (11) selon l'une des revendications 1 à 3, **caractérisé en ce que** ledit ballon (11) se compose pour l'essentiel d'un cylindre (3) ainsi que d'un couvercle (1) et d'un fond (9) rattachés audit cylindre, et la plaque de séparation (2) est fixée au couvercle (1) par l'intermédiaire de clips à enclenchement (10).

5. Configuration de plusieurs ballons à stratification (11) selon l'une des revendications 1 à 4, **caractérisée en ce que** les ballons (11) sont actionnés en série, si bien que la conduite de sortie d'eau chaude (6) du premier ballon (11) est reliée à la conduite d'arrivée d'eau froide (8) du ballon suivant (11).
